# EUROPÄISCHE PATENTSCHRIFT

(11) **EP 2 514 979 B1**
(45) Veröffentlichungstag und Bekanntmachung des Hinweises auf die Patenterteilung: **27.04.2016**
(21) Anmeldenummer: 12158346.2
(22) Anmeldetag: 07.03.2012
(51) Int. Cl.: F16B 13/06, F16B 13/08, F16B 31/02

(54) **Spreizdübel**
expansion anchor
cheville à expansion

(30) Priorität: 18.04.2011 DE 102011007570
(43) Veröffentlichungstag der Anmeldung: 24.10.2012
(73) Patentinhaber: HILTI Aktiengesellschaft, 9494 Schaan (LI)
(72) Erfinder: Oberndorfer, Georg, 6800 Feldkirch (AT); Schaeffer, Marc, 6800 Feldkirch-Nofels (AT)
(74) Vertreter: Hilti Aktiengesellschaft Corporate Intellectual Property

(56) Entgegenhaltungen:
- DE-A1- 2 658 996
- DE-A1-102007 027 831
- US-A- 5 228 250
- US-A- 5 413 441

## Beschreibung

Die vorliegende Erfindung betrifft einen Spreizdübel gemäß dem Oberbegriff des Anspruches 1.

Spreizdübel mit einem Ankerbolzen, einem Spreizkörper, Angriffsmitteln sowie eine den Ankerbolzen umgebende Spreizhülse dienen dazu, Werkstücke an einem Bauteil zu befestigen. Hierzu wird in das Bauteil, z. B. eine Betonwand oder eine Betondecke, eine Bohrung eingearbeitet und anschließend der Spreizdübel in die Bohrung eingeschoben. Mit den Angriffsmitteln wird der konische Spreizkörper axial an dem Ankerbolzen bewegt, so dass dadurch der Spreizkörper die Spreizhülse radial nach außen drückt und eine Verankerung des Spreizdübels aufgrund von radialen Kräften zwischen der Spreizhülse bzw. dem Spreizkörper und dem Bauteil, z. B. dem Beton an der Bohrung, besteht. Dadurch können Werkstücke oder Gegenstände an dem Spreizdübel befestigt werden.

Zwischen der Spreizhülse und der Bohrlochwandung an dem Bauteil bewirkt somit eine Reibkraft zwischen der Bohrlochwandung und der Spreizhülse eine Verankerung des Spreizdübels. Die konischen Spreizkörper sind im Allgemeinen rotationssymmetrisch zu einer Längsachse des Ankerbolzens bzw. des Spreizkörpers ausgebildet.

Als Angriffsmittel werden beispielsweise ein Gewinde an dem Ankerbolzen, eine Beilagscheibe und eine Mutter eingesetzt. Durch ein Verschrauben der Mutter auf dem Gewinde des Ankerbolzens wird die Beilagscheibe gegen den Beton an einem Bohrlochmund gedrückt und dadurch eine axiale Bewegung des Ankerbolzens und damit auch des konischen Spreizkörpers bewirkt. Auf die Mutter ist damit ein Drehmoment aufzubringen, um diese mit dem Gewinde an dem Ankerbolzen zu verschrauben bzw. einzuschrauben. Bei einer Anwendung des Spreizdübels in Zugzonen, d. h. bei gerissenem Beton in Spannbeton bei dem kleine Risse unten an der Spannbetondecke auftreten, vergrößert sich der Durchmesser des Bohrlochs während des Aufspreizens der Spreizhülse mit dem Spreizkörper. Dadurch kommt es während der radialen Verspannung der Spreizhülse an dem Beton an der Bohrung zu einer zusätzlichen axialen Verschiebung des Ankerbolzens mit der Spreizhülse, einem sogenannten Nachspreizen. Der Spreizkörper, d. h. hier insbesondere die konische Geometrie des Spreizkörpers, muss so ausgelegt sein, dass sowohl in einem unteren Toleranzbereich eines Bohrlochdurchmessers als auch in einem oberen Toleranzbereich des Bohrlochdurchmessers die erforderliche Spreizkraft, d. h. radiale Vorspannung zwischen der Spreizhülse und dem Beton an dem Bohrloch, erreicht werden kann. Je nach dem unterschiedlichen Durchmesser des Bohrloches im Toleranzbereich führt dies zu verschiedenen axialen Verschiebungswegen zwischen dem Ankerbolzen und der Spreizhülse. Bei Bohrlochdurchmessern im oberen Toleranzbereich kann es zusätzlich zu einer Verschiebung der Spreizhülse relativ zu dem Bohrloch kommen (Hülsenschlupf). Bei einem Hülsenschlupf ragen die verschiedenen Ankerbolzen bei einem unterschiedlichen Hülsenschlupf unterschiedlich weit aus dem Bohrloch heraus und eine axiale Verschiebung der Spreizhülse in Richtung zu dem Bohrlochmund führt auch zu nachteiligen unterschiedlichen Verankerungstiefen des Spreizdübels in der Bohrung. Die Folge ist eine erhöhte Streuung der Bruchlast der Spreizdübel.

Die DE 41 16 149 A1 zeigt einen Spreizdübel mit Ankerbolzen, dessen zylindrischer Schaft in einem Endbereich in Setzrichtung eine Erweitung aufweist und an dem dieser Erweiterung abgewandten Ende Angriffsmittel zur Lastaufnahme trägt, wobei der Ankerbolzen zumindest entlang eines Teils seines Schaftes von einer relativ dazu verschiebbaren Spreizhülse umgeben ist, die wenigstens einen zum setzungsseitigen Ende hin offenen Längsschlitz aufweist und an ihrer Außenkontur mit radial abstehenden Vorsprüngen versehen ist.

Ein gattungsgemässer Spreizdübel mit einem Exzenterelement geht aus der US 5,413,441 A hervor. Ein weiterer Spreizdübel mit Exzenterelement wird in der DE 10 2007 027 831 A1 beschrieben.

Die US 5,228,250 A beschreibt einen Spreizanker mit einer Abreissmutter. Weitere Elemente zur Drehmomentbegrenzung sind aus der DE 26 58 996 A1 bekannt.

Die Aufgabe der vorliegenden Erfindung besteht darin, einen Spreizdübel zur Verfügung zu stellen, bei dem eine axiale Verschiebung der Spreizhülse, insbesondere bei einem Bohrlochdurchmesser im unteren Toleranzbereich bzw. einer Hohllage, vermieden werden kann.

Diese Aufgabe wird gelöst mit einem Spreizdübel, umfassend einen Ankerbolzen mit einem Spreizkörper an einem ersten Endabschnitt des Ankerbolzens und mit einer Längsachse, ein Angriffsmittel an dem Ankerbolzen zur Lastaufnahme, und eine den Ankerbolzen umgebende Spreizhülse, wobei der Spreizdübel wenigstens eine Exzentergeometrie aufweist, so dass mittels einer Rotationsbewegung des Ankerbolzens um die Längsachse als Rotationsachse eine Aufspreizung der Spreizhülse ausführbar ist, und wobei der Ankerbolzen an dem anderen zweiten Endabschnitt mit einer Drehmittelaufnahme und einer Sollbruchstelle zur Begrenzung des von der Drehmittelaufnahme aufnehmbaren Drehmomentes versehen ist, wobei die Drehmittelaufnahme und die Sollbruchstelle einteilig mit dem Ankerbolzen ausgebildet sind.

Mit Hilfe der wenigstens einen Exzentergeometrie kann ohne einer axialen Bewegung des Ankerbolzens mit dem Spreizkörper eine Aufspreizung der Spreizhülse erfolgen. Eine Aufspreizung der Spreizhülse, d. h. eine radiale Bewegung der Spreizhülse in Richtung von der Längsachse des Ankerbolzens weg, führt zu einer radialen Vorspannkraft zwischen der Spreizhülse und dem Werkstoff, z. B. Beton, an der Bohrung. Mit Hilfe dieser Vorspannung zwischen der Spreizhülse und dem Werkstoff an der Bohrung kann der Spreizdübel in der Bohrung verankert werden. Da jedoch zum Aufspreizen der Spreizhülse keine axiale Bewegung des Ankerbolzens erforderlich ist, welche zu einem Hülsenschlupf führen kann, d. h. einer axialen Bewegung der Spreizhülse in Richtung zu einem Bohrlochmund, ist ein Hülsenschlupf ausgeschlossen. Lediglich mit der Rotationsbewegung des Ankerbolzens ist es möglich, die Spreizhülse an dem Werkstoff der Bohrung zu verspreizen.

Insbesondere umfasst der Spreizdübel mehrere Exzentergeometrien. Mit Hilfe von mehreren Exzentergeometrien kann tangential umlaufend eine gleichmäßigere Aufspreizung der Spreizhülse ausgeführt werden.

In einer weiteren Ausgestaltung ist die wenigstens eine Exzentergeometrie an dem Ankerbolzen und/oder an der Spreizhülse ausgebildet. Zweckmäßig liegt eine Exzentergeometrie an dem Ankerbolzen auf einer Exzentergeometrie an der Spreizhülse auf.

In einer ergänzenden Ausführungsform ist die wenigstens eine Exzentergeometrie an dem Spreizkörper oder außerhalb des Spreizkörpers an dem Ankerbolzen ausgebildet.

Erfindungsgemäss ist der Ankerbolzen an dem anderen zweiten Endabschnitt mit einer Drehmittelaufnahme, z. B. einen Mehrkant, und einer Sollbruchstelle zur Begrenzung des von der Drehmittelaufnahme aufnehmbaren Drehmomentes versehen. Mit der Drehmittelaufnahme kann der Spreizdübel in eine Rotationsbewegung versetzt werden, um mittels der wenigstens einen Exzentergeometrie die Spreizhülse aufzuspreizen und eine Verspannung zwischen der Spreizhülse und dem Beton an der Bohrung zu bewirken. Die Sollbruchstelle bewirkt, dass ein vorgesehenes Drehmoment zur Versetzung des Ankerbolzens in die Drehbewegung nicht überschritten wird. An dem Mehrkant kann beispielsweise ein Schraubschlüssel angesetzt werden.

Alternativ kann vorgesehen sein, dass das wenigstens eine Angriffsmittel ein Gewinde an dem Ankerbolzen und eine Mutter aufweist, die auf dem Gewinde angeordnet ist, wobei eine Einrichtung vorgesehen ist, welche die Mutter bis zum Erreichen eines Grenzdrehmomentes drehfest am Gewinde hält und nach Übersteigen des Grenzdrehmomentes die Mutter für eine Drehung relativ zum Gewinde freigibt, insbesondere irreversibel freigibt. Die Einrichtung kann zum Beispiel durch eine Sollbruchstelle realisiert werden, beispielsweise an einen Stift, der zwischen Mutter und Ankerbolzen verläuft.

Die Einrichtung kann auch durch Reibflächen zwischen Ankerbolzen und Mutter gebildet sein. Gemäß der vorliegenden Ausführungsform ist die Mutter so lange drehfest mit der Ankerstange verbunden, bis das Grenzdrehmoment erreicht ist, welches dem Abschluss des Setzvorgangs entspricht. Nach Erreichen des Grenzdrehmomentes kann die Mutter dann längs des Gewindes geschraubt werden. Gemäß dieser Ausführungsform kann eine separate Drehmittelaufnahme entbehrlich sein, da sowohl das Setzen des Ankers als auch das Befestigen der Last mittels ein und derselben Mutter durchgeführt werden kann.

In einer Variante ist die wenigstens eine Exzentergeometrie zwischen dem Ankerbolzen und einer radialen Außenseite der Spreizhülse ausgebildet und/oder die wenigstens eine Exzentergeometrie ist einteilig an dem Ankerbolzen oder der Spreizhülse ausgebildet. Bei einer einteiligen Ausbildung der wenigstens einen Exzentergeometrie an dem Ankerbolzen oder an der Spreizhülse ist diese besonders einfach bei der Herstellung, beispielsweise beim Urformen, mit herzustellen und andererseits besteht ein besonders fester Verbund zwischen der wenigstens einen Exzentergeometrie und dem Ankerbolzen oder der Spreizhülse.

Zweckmäßig ist mittels eine axialen Bewegung des Ankerbolzens aufgrund einer konischen Geometrie des Spreizkörpers die Spreizhülse aufspreizbar. Nach der Verspannung der Spreizhülse mittels der wenigstens einen Exzentergeometrie aufgrund einer Rotationsbewegung des Ankerbolzens als Initialverspreizung, um einen Hülsenschlupf zu verhindern, kann durch eine axiale Bewegung des Ankerbolzens eine zusätzliche Verspreizung der Spreizhülse an dem Werkstoff der Bohrung ausgeführt werden. Beispielsweise auch beim Einsatz des Spreizdübels in Zugzonen, d. h. gerissenem Beton, kann es erforderlich sein, dass eine entsprechende Nachspreizung im Anschluss an die Initialverspreizung erforderlich ist. Nach der Initialverspreizung kann somit eine zusätzliche Aufspreizung der Spreizhülse, z. B. als dauerhafte Verspreizung aufgrund einer an dem Ankerbolzen wirkenden Zugkraft, ausgeführt werden. Eine Dauerverspreizung der Spreizhülse ist erforderlich, um dauerhaft an dem Spreizdübel Lasten befestigen zu können. Diese Dauerverspreizung kann, wie bereits erwähnt, durch eine dauerhafte wirkende Zugkraft an dem Ankerbolzen aufgrund einer Auflage einer Beilagscheibe oder einer Mutter am Beton bewirkt sein.

In einer weiteren Ausführungsform umfasst das wenigstens eine Angriffsmittel ein Gewinde an dem Ankerbolzen, eine Beilagscheibe und eine Mutter.

Erfindungsgemäß kann der Anker auch einen Nagelkopf am Ankerbolzen aufweisen; eine Mutter kann dann entbehrlich sein. Zum Verdrehen und Setzen der Ankerstange kann das Angriffsmittel z.B. als Mehrkant ausgebildet sein, der am Nagelkopf angeordnet ist.

Insbesondere sind das wenigsten eine Angriffsmittel an einem zweiten Endabschnitt des Ankerbolzens ausgebildet.

In einer weiteren Ausgestaltung besteht der Ankerbolzen und/oder der Spreizkörper und/oder das wenigstens eine Angriffsmittel wenigstens teilweise, insbesondere vollständig, aus Metall, z. B. Stahl oder Aluminium, und/oder mit dem Spreizdübel ist ein in dieser Schutzrechtsanmeldung beschriebenes Verfahren ausführbar.

Erfindungsgemäßes Verfahren zur Befestigung eines Spreizdübels, insbesondere eines in dieser Schutzrechtsanmeldung beschriebenen Spreizdübels, mit den Schritten: Einführen des Spreizdübels in ein Bohrloch, Aufspreizen einer Spreizhülse des Spreizdübels, so dass die Spreizhülse radial mit einer Bohrlochwandung verspreizt wird, wobei der Ankerbolzen mit dem Spreizkörper in eine Rotationsbewegung versetzt wird und mit wenigstens einer Exzentergeometrie aufgrund der Rotationsbewegung die Spreizhülse aufgespreizt wird. Die Rotationsbewegung ist dabei vorzugsweise eine Drehbewegung um maximal 360°. Bei mehr als einer Exzentergeometrie entspricht der Drehwinkel vorzugsweise 360° geteilt durch die Anzahl der wirksamen Exzentergeometrien.

In einer ergänzenden Variante entspricht die Rotationsachse der Rotationsbewegung einer Längsachse des Ankerbolzens.

In einer weiteren Variante wird an einer Drehmittelaufnahme an dem Ankerbolzen außerhalb des Bohrloches ein Drehmoment aufgebracht, um den Ankerbolzen mit dem Spreizkörper in die Rotationsbewegung zu versetzten.

In einer weiteren Ausgestaltung wird der Ankerbolzen nach oder während der Aufspreizung der Spreizhülse mit der wenigstens einer Exzentergeometrie aufgrund der Rotationsbewegung des Ankerbotzens in eine axiale Translationsbewegung in Richtung zu einem Bohrlochmund versetzt und dadurch wird aufgrund einer konischen Geometrie des Spreizkörpers die Spreizhülse aufgespreizt.

In einer zusätzlichen Ausgestaltung wird der Ankerbolzen mit wenigstens einem Angriffsmittel, z. B. indem eine Mutter in ein Gewinde des Ankerbolzens geschraubt wird, in die axiale Translationsbewegung versetzt. Eine axiale Translationsbewegung kann durch ein Verschrauben der Mutter mit dem Gewinde des Ankerbolzens bewirkt werden und eine derartige Verschraubung bewirkt eine dauerhafte Zugkraft an dem Ankerbolzen und diese Zugkraft führt zu einer Dauerverspreizung der Spreizhülse aufgrund der konischen Geometrie des Spreizkörpers. Nach der Initialverspreizung aufgrund der Rotationsbewegung des Ankerbolzens kann somit eine Dauerverspreizung aufgrund einer axialen Translationsbewegung des Ankerbolzens ausgeführt werden. Eine Rückbewegung der Spreizhülse aufgrund einer derartigen Dauerverspreizung wegen der axialen Translationsbewegung ist jedoch ausgeschlossen, weil eine Bewegung des Ankerbolzens aufgrund des Aufliegens der Beilagscheibe am Beton im Bereich des Bohrlochmundes ausgeschlossen ist.

In einer ergänzenden Ausgestaltung weist der Ankerbolzen einen Auflagering auf und der Spreizkörper stützt sich auf dem Auflagering ab, so dass sich die Spreizhülse beim Einschieben in die Bohrung an dem Auflagering abstützt. Bei einem Herausschrauben des Ankerbolzens mit den Angriffsmitteln, z. B. der Mutter, ist eine axiale Befestigung der Spreizhülse erforderlich, damit eine Aufspreizung der Spreizhülse erfolgen kann. Dies erfolgt mittels Reibschluss, z. B. dadurch, dass die Spreizhülse zusätzlich mit Vorsprüngen versehen ist.

In einer ergänzenden Variante ist die Spreizhülse bis zu einer Mutter einer Beilagscheibe geführt, d. h. liegt auf einem Angriffsmittel auf, und bei einem Herausschrauben des Ankerbolzens wird die axiale Fixierung der Spreizhülse nicht durch eine Reibung zwischen der Bohrlochwandung und der Spreizhülse zur Verfügung gestellt, sondern dadurch, dass die Spreizhülse auf wenigstens einem Angriffsmittel, z. B. einer Beilagscheibe, aufliegt.

Im Nachfolgenden wird ein Ausführungsbeispiel der Erfindung unter Bezugnahme auf die beigefügten Zeichnungen näher beschrieben. Es zeigt:
- Fig. 1: einen Längsschnitt eines Spreizdübel,
- Fig. 2: eine perspektivische Teilansicht des Spreizdübels ohne Spreizhülse,
- Fig. 3: einen Querschnitt A-A gemäß Fig. 1 vor dem Verdrehen und
- Fig. 4: den Querschnitt A-A gemäß Fig. 1 nach dem Verdrehen.

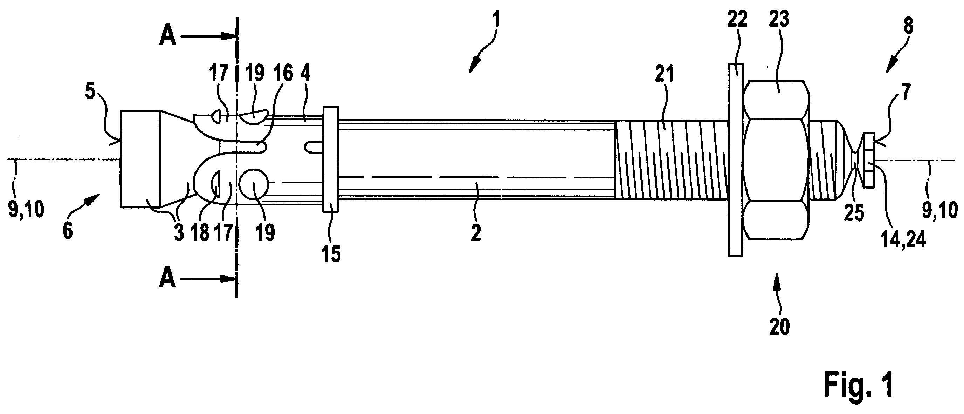

Ein in Fig. 1 dargestellter Spreizdübel 1 dient dazu, um Werkstücke an einem Bauteil zu befestigen. In dem Bauteil (nicht dargestellt), ist eine Bohrung bzw. ein Bohrloch eingearbeitet und zum Befestigen des Werkstückes ist der Spreizdübel 1 in diese Bohrung einzuführen bzw. einzuschlagen. Das Bauteil ist beispielsweise eine Betonwand oder eine Betondecke eines Gebäudes.

Der Spreizdübel 1 umfasst einen Ankerbolzen 2. Der Ankerbolzen 2 weist ein erstes Ende 5 mit einem ersten Endabschnitt 6 auf und ein zweites Ende 7 mit einem zweiten Endabschnitt 8. Beim Einführen des Spreizdübels 1 in ein Bohrloch eines Bauteils wird das erste Ende 5 in das Bohrloch eingeführt und ein zweites Ende 7 bzw. auch ein zweiter Endabschnitt 8 des Ankerbolzens 2 bleiben außerhalb des Bohrloches. Einteilig mit dem Ankerbolzen 2 ist am ersten Endabschnitt 6 ein konischer Spreizkörper 3 ausgebildet. Zwischen dem Spreizkörper 3 und einem einteilig mit dem Ankerbolzen 2 ausgebildetem Auflagering 15 ist um den Ankerbolzen 2 koaxial eine Spreizhülse 4 angeordnet. Die Spreizhülse 4 liegt auf dem Auflagering 15 auf, so dass beim Einschieben des Spreizdübels 1 in das Bohrloch und damit verbundenen Reibungskräften zwischen der Bohrlochwandung und der Spreizhülse 4 die Spreizhülse 4 aufgrund des Aufliegens auf dem Auflagering 5 nicht in Richtung zu dem zweiten Ende 7 verschoben wird auf dem Ankerbolzen 2 (Fig. 1).

Die Spreizhülse 4 weist drei Längsschlitze 16 in Richtung einer Längsachse 10 des Ankerbolzens 2 auf, so dass aufgrund der axialen Längsschlitze 16 die Spreizhülse 4 drei Spreizsegmente 17 aufweist. An der Spreizhülse 4, insbesondere den Spreizsegmenten 17, sind erste Vorsprünge 18 und zweite Vorsprünge 19 ausgebildet. Die ersten Vorsprünge 18 sind näher an dem ersten Ende 5 des Ankerbolzens 2 ausgebildet als die zweiten Vorsprünge 19. Die ersten und zweiten Vorsprünge 18, 19 weisen ferner auch vorzugsweise eine unterschiedliche Geometrie auf.

Am zweiten Endabschnitt 8 des Ankerbolzens 2 sind drei Angriffsmittel 20 angeordnet. Die Angriffsmittel 20 sind ein in den Ankerbolzen 2 eingearbeitetes Gewinde 21, eine Beilagscheibe 22 und eine Mutter 23. Die Mutter 23 weist ein nicht dargestelltes Innengewinde auf, welches in das Außengewinde 21 an dem Ankerbolzen 2 eingreift. Ferner sind am zweiten Endabschnitt 8 eine als Mehrkant 24 ausgebildete Drehmittelaufnahme 14 und eine Sollbruchstelle 25 vorhanden, welche einteilig mit dem Ankerbolzen 2 ausgebildet sind.

Zur Befestigung von Werkstücken an dem Spreizdübel 1 ist der Spreizdübel 1 in ein Bohrloch bzw. eine Bohrung eines Bauteils einzuführen bzw. einzuschlagen. Nach dem Einschieben des Spreizdübels 1 in dieses Bohrloch ist das erste Ende 5 innerhalb des Bohrloches und das zweite Ende 7 außerhalb des Bohrloches angeordnet.

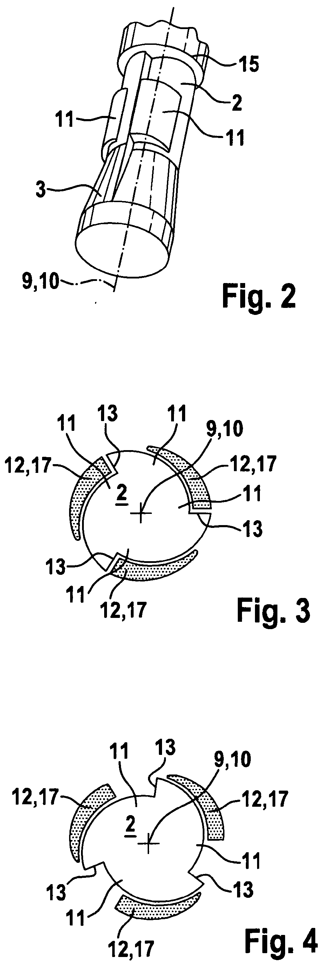

An dem Ankerbolzen 2 in Richtung zu dem zweiten Endabschnitt 8 des Ankerbolzens 2 sind nach dem Spreizkörper 3 an dem Ankerbolzen 2 drei Exzentergeometrien 11 (Fig. 2) ausgebildet. Auch an einer radialen Innenseite der Spreizhülse 4 sind ebenfalls drei Exzentergeometrien 12 (Fig. 3 und 4) vorhanden. Aufgrund der Schnittbildung in Fig. 3 und 4 sind in Fig. 3 und 4 von der Spreizhülse 4 nur die Spreizsegmente 17 mit den daran ausgebildeten Exzentergeometrien 12 sichtbar. Nach dem Einschieben des Spreizdübels 1 in das Bohrloch wird mit einem Schraubschlüssel auf den Mehrkant 24 ein Drehmoment aufgebracht, so dass der Ankerbolzen 2 mit dem Spreizkörper 3 eine Rotationsbewegung mit einer Rotationsachse 9, welche der Längsachse 10 des Ankerbolzens 2 entspricht, ausführt. Aufgrund von insgesamt drei wirksamen Exzentergeometrien 11, 12 führt der Ankerbolzen 2 mit den Spreizdübeln 3 von der in Fig. 3 dargestellten Drehwinkellage nach dem Einführen in das Bohrloch und vor dem Verdrehen des Ankerbolzens 2 einen Drehwinkel von 120° zu der in Fig. 4 dargestellten Drehwinkellage aus. Aufgrund der Geometrie der beiden Exzentergeometrien 11, 12 an dem Ankerbolzen 2 und der Spreizhülse 4 wird aufgrund der Rotationsbewegung von 120° des Ankerbolzens 2 und des Spreizkörpers 3 die Spreizhülse 4 aufgespreizt, d. h. radial nach außen bewegt, was zu einer radialen Verspannung zwischen der Spreizhülse 4 und dem Werkstoff an dem Bohrloch, d. h. Beton, führt. Aufgrund von Reibkräften zwischen der Spreizhülse 4 und der Bohrlochwandung sowie auch aufgrund von einer formschlüssigen Verbindung mit der Vorsprünge 18, 19 führt die Spreizhülse 4 keine Rotationsbewegung um die Rotationsachse 9 aus. Durch das von dem Schraubschlüssel auf den Mehrkant 24 ausgebrachte Drehmoment und der daraus resultierenden Rotationsbewegung mit einem Drehwinkel von 120° des Ankerbolzens 2 einschließlich der Exzentergeometrien 11 an dem Ankerbolzen 2 kann somit eine Initialverspreizung der Spreizhülse 4 an der Bohrlochwandung ausgeführt werden. Aufgrund dieser Initialverspreizung kommt es zu einer kraft- und vorzugsweise auch formschlüssigen Verbindung zwischen der Spreizhülse 4 und dem Beton an der Bohrung, so dass dadurch eine axiale Bewegung der Spreizhülse 4, d. h. ein Hülsenschlupf, ausgeschlossen ist.

Nach der Initialverspreizung wird mittels der Angriffsmittel 20, in dem die Mutter 23 mit dem Gewinde 21 verschraubt wird, der Ankerbolzen 2 und damit auch der Spreizkörper 3 in axialer Richtung bezüglich der Längsachse 10 nach außen geschraubt, so dass dadurch aufgrund der axialen Fixierung als Initialverspreizung der Spreizhülse 4 mit Reibungskräften zwischen der Spreizhülse 4 und der Bohrlochwandung, auch aufgrund der Vorsprünge 18, 19, die auch eine formschlüssige Verbindung ermöglichen, wird mit dem Spreizkörper 3 die Spreizhülse 4 an den Spreizsegmenten 17 zusätzlich radial nach außen gespreizt als Dauerverspreizung, so dass dauerhaft Reibkräfte und eine Vorspannung zwischen der Spreizhülse 4 und/oder dem Spreizkörper 3 und der Bohrlochwandung auftreten für eine ständig axiale Befestigung des Spreizdübels 1 in dem nicht dargestellten Bohrloch des nicht dargestellten Bauteiles.

Nach dem Einbringen des Spreizdübels 1 in das Bohrloch wird somit in einem ersten Arbeitsschritt eine Initialverspreizung zwischen der Spreizhülse 4 und dem Beton an der Bohrung hergestellt, um einen Hülsenschlupf, d. h. eine axiale Bewegung der Spreizhülse 4 während der Herstellung der Dauerverspreizung, zu vermeiden. Während der Dauerverspreizung wird aufgrund einer Zugkraft in dem Ankerbolzen 2, weil die Beilagscheibe 22 am Beton im Bereich des Bohrlochmundes aufliegt, der Ankerbolzen 2 axial in Richtung zu dem Bohrlochmund bewegt. Aufgrund der bereits vorhandenen Initialverspreizung führt jedoch die Spreizhülse 4 keine axiale Bewegung mit aus.

Insgesamt betrachtet sind mit dem erfindungsgemäßen Spreizdübel 1 wesentliche Vorteile verbunden. Die mittels einer Rotationsbewegung des Ankerbolzens 2 zunächst hergestellte Initialverspreizung schließt eine axiale Verschiebung der Spreizhülse 4 in der darauffolgenden Dauerverspreizung aufgrund einer axialen Bewegung des Ankerbolzens 2 aus. Dadurch kann in vorteilhafter Weise ein Hülsenschlupf der Spreizhülse 4 vermieden werden, was zu einer unterschiedlichen Einbindetiefe des Spreizdübels 1 in nachteiliger Weise führen würde. Mit der nachfolgenden Dauerverspreizung können auch bei Bohrlochdurchmessern im oberen Toleranzbereich sowie bei gerissenem Beton in Spannbeton eine Dauerverspreizung der Spreizhülse 4 am Beton des Bohrloches ausgeführt werden.

## Patentansprüche

1. Spreizdübel (1), umfassend
- einen Ankerbolzen (2) mit einem Spreizkörper (3) an einem ersten Endabschnitt (6) des Ankerbolzens (2) und mit einer Längsachse (10),
- wenigstens ein Angriffsmittel (20) an dem Ankerbolzen (2) zur Lastaufnahme, und
- eine den Ankerbolzen (2) umgebende Spreizhülse (4),
wobei der Spreizdübel (1) wenigstens eine Exzentergeometrie (11, 12) aufweist, so dass mittels einer Rotationsbewegung des Ankerbolzens (2) um die Längsachse (10) als Rotationsachse (9) eine Aufspreizung der Spreizhülse (4) ausführbar ist,
**dadurch gekennzeichnet, dass**
der Ankerbolzen (2) an dem anderen zweiten Endabschnitt (8) mit einer Drehmittelaufnahme (14) und einer Sollbruchstelle (25) zur Begrenzung des von der Drehmittelaufnahme (14) aufnehmbaren Drehmomentes versehen ist, wobei die Drehmittelaufnahme (14) und die Sollbruchstelle (25) einteilig mit dem Ankerbolzen (2) ausgebildet sind.

2. Spreizdübel nach Anspruch 1,
**dadurch gekennzeichnet, dass**
der Spreizdübel (1) mehrere Exzentergeometrien (11, 12) umfasst.

3. Spreizdübel nach Anspruch 1 oder 2,
**dadurch gekennzeichnet, dass**
die wenigstens eine Exzentergeometrie (11, 12) an dem Ankerbolzen (2) und/oder an der Spreizhülse (4) ausgebildet ist.

4. Spreizdübel nach einem oder mehreren der vorhergehenden Ansprüche,
**dadurch gekennzeichnet, dass**
die wenigstens eine Exzentergeometrie (11, 12) an dem Spreizkörper (3) oder außerhalb des Spreizkörpers (3) an dem Ankerbolzen (2) ausgebildet ist.

5. Spreizdübel nach einem oder mehreren der vorhergehenden Ansprüche,
**dadurch gekennzeichnet, dass**
die Drehmittelaufnahme (14) ein Mehrkant (24) ist.

6. Spreizdübel nach einem oder mehreren der vorhergehenden Ansprüche,
**dadurch gekennzeichnet, dass**
die wenigstens eine Exzentergeometrie (11, 12) zwischen dem Ankerbolzen (2) und einer radialen Außenseite der Spreizhülse (4) ausgebildet ist
und/oder
die wenigstens eine Exzentergeometrie (11, 12) einteilig an dem Ankerbolzen (2) oder der Spreizhülse (4) ausgebildet ist.

7. Spreizdübel nach einem oder mehreren der vorhergehenden Ansprüche,
**dadurch gekennzeichnet, dass**
mittels eine axialen Bewegung des Ankerbolzens (2) aufgrund einer konischen Geometrie des Spreizkörpers (3) die Spreizhülse (4) aufspreizbar ist.

8. Spreizdübel nach einem oder mehreren der vorhergehenden Ansprüche,
**dadurch gekennzeichnet, dass**
das wenigstens eine Angriffsmittel (20) ein Gewinde (21) an dem Ankerbolzen (2), eine Beilagscheibe (22) und eine Mutter (23) umfasst.

9. Spreizdübel nach einem oder mehreren der vorhergehenden Ansprüche,
**dadurch gekennzeichnet, dass**
das wenigsten eine Angriffsmittel (20) an einem zweiten Endabschnitt (8) des Ankerbolzens (2) ausgebildet sind.

10. Spreizdübel nach einem oder mehreren der vorhergehenden Ansprüche,
**dadurch gekennzeichnet, dass**
der Ankerbolzen (2) und/oder der Spreizkörper (3) und/oder das wenigstens eine Angriffsmittel (20) wenigstens teilweise, insbesondere vollständig, aus Metall, z. B. Stahl, besteht.

11. Verfahren zur Befestigung eines Spreizdübels (1) gemäß einem oder mehreren der vorhergehenden Ansprüche, mit den Schritten:
- Einführen des Spreizdübels (1) gemäß einem oder mehreren der vorhergehenden Ansprüche in ein Bohrloch,
- Aufspreizen einer Spreizhülse (1) des Spreizdübels (1), so dass die Spreizhülse (1) radial mit einer Bohrlochwandung verspreizt wird,
wobei
der Ankerbolzen (2) mit dem Spreizkörper (3) in eine Rotationbewegung versetzt wird und mit wenigstens einer Exzentergeometrie (11, 12) aufgrund der Rotationsbewegung die Spreizhülse (4) aufgespreizt wird.

12. Verfahren nach Anspruch 11,
**dadurch gekennzeichnet, dass**
die Rotationsachse (9) der Rotationsbewegung einer Längsachse (10) des Ankerbolzens (2) entspricht.

13. Verfahren nach Anspruch 11 oder 12,
**dadurch gekennzeichnet, dass**
an einer Drehmittelaufnahme (14) an dem Ankerbolzen (2) außerhalb des Bohrloches ein Drehmoment aufgebracht wird, um den Ankerbolzen (2) mit dem Spreizkörper (3) in die Rotationsbewegung zu versetzten.

14. Verfahren nach einem oder mehreren der Ansprüche 11 bis 13,
**dadurch gekennzeichnet, dass**
der Ankerbolzen (2) nach oder während der Aufspreizung der Spreizhülse (4) mit der wenigstens einer Exzentergeometrie (11, 12) aufgrund der Rotationsbewegung des Ankerbolzens (2) in eine axiale Translationsbewegung in Richtung zu einem Bohrlochmund versetzt wird und dadurch aufgrund einer konischen Geometrie des Spreizkörpers (3) die Spreizhülse (4) aufgespreizt wird.

15. Verfahren nach Anspruch 14,
**dadurch gekennzeichnet, dass**
der Ankerbolzen (2) mit wenigstens einem Angriffsmittel (20), z. B. indem eine Mutter (23) in ein Gewinde (21) des Ankerbolzens (2) geschraubt wird, in die axiale Translationsbewegung versetzt wird.

## Claims

1. Expansion anchor (1), comprising
- an anchor bolt (2) with an expansion body (3) on a first end section (6) of the anchor bolt (2) and with a longitudinal axis (10),
- at least one engagement means (20) on the anchor bolt (2) for load absorption, and
- an expansion sleeve (4) surrounding the anchor bolt (2),
wherein the expansion anchor (1) has at least one eccentric geometry (11, 12), such that an expansion of the expansion sleeve (4) can be effected by means of a rotational movement of the anchor bolt (2) about the longitudinal axis (10) as the axis of rotation (9),
**characterised in that**
the anchor bolt (2) is provided on the other, second end section (8) with a receptacle (14) of a turning means and with a predetermined breaking point (25) for limiting the torque that can be absorbed by the turning means receptacle (14), and the turning means receptacle (14) and the predetermined breaking point (25) are formed integrally with the anchor bolt (2).

2. Expansion anchor according to Claim 1,
**characterised in that**
the expansion anchor (1) includes a plurality of eccentric geometries (11, 12).

3. Expansion anchor according to Claim 1 or 2,
**characterised in that**
the at least one eccentric geometry (11, 12) is formed on the anchor bolt (2) and/or on the expansion sleeve (4).

4. Expansion anchor according to one or more of the preceding claims,
**characterised in that**
the at least one eccentric geometry (11, 12) is formed on the expansion body (3) or outside the expansion body (3) on the anchor bolt (2).

5. Expansion anchor according to one or more of the preceding claims,
**characterised in that**
the turning means receptacle (14) is configured as a polygon (24).

6. Expansion anchor according to one or more of the preceding claims,
**characterised in that**
the at least one eccentric geometry (11, 12) is formed between the anchor bolt (2) and a radially outer side of the expansion sleeve (4)
and/or
the at least one eccentric geometry (11, 12) is formed integrally on the anchor bolt (2) or on the expansion sleeve (4).

7. Expansion anchor according to one or more of the preceding claims,
**characterised in that**
the expansion sleeve (4) can be expanded by means of an axial movement of the anchor bolt (2) as a result of a conical geometry of the expansion body (3).

8. Expansion anchor according to one or more of the preceding claims,
**characterised in that**
the at least one engagement means (20) includes a thread (21) on the anchor bolt (2), a washer (22) and a nut (23).

9. Expansion anchor according to one or more of the preceding claims,
**characterised in that**
the at least one engagement means (20) is formed on a second end section (8) of the anchor bolt (2).

10. Expansion anchor according to one or more of the preceding claims,
**characterised in that**
the anchor bolt (2) and/or the expansion body (3) and/or the at least one engagement means (20) are made at least partially, in particular completely, of metal, for example steel.

11. Method for fastening an expansion anchor (1) according to one or more of the preceding claims, comprising the steps:
- insertion of the expansion anchor (1) according to one or more of the preceding claims into a drill hole,
- expansion of an expansion sleeve (4) of the expansion anchor (1), so that the expansion sleeve (4) Is braced radially against a wall of the drill hole,
wherein
a rotational movement is imparted to the expansion bolt (2) with the expansion body (3) and the expansion sleeve (4) is expanded by means of at least one eccentric geometry (11, 12) as a result of the rotational movement.

12. Method according to Claim 11,
**characterised in that**
the axis of rotation (9) of the rotational movement coincides with a longitudinal axis (10) of the anchor bolt (2).

13. Method according to Claim 11 or 12,
**characterised in that**
a torque is applied to a receptacle (14) of the turning means on the anchor bolt (2) outside the drill hole in order to impart the rotational movement to the anchor bolt (2) with the expansion body (3).

14. Method according to one or more of Claims in 11 to 13,
**characterised in that**
after or during the expansion of the expansion sleeve (4) by means of the at least one eccentric geometry (11, 12), an axially translational movement towards the mouth of a drill hole is imparted to the anchor bolt (2) as a result of the rotational movement of the anchor bolt (2), and the expansion sleeve (4) is thereby expanded as a result of a conical geometry of the expansion body (3).

15. Method according to Claim 14,
**characterised in that**
the axially translational movement is imparted to the anchor bolt (2) by means of at least one engagement means (20), for example **in that** a nut (23) is screwed on a thread (21) of the anchor bolt (2).

## Revendications

1. Cheville à expansion (1), comprenant :
- un boulon d'ancrage (2) ayant un élément d'expansion (3) à une première partie d'extrémité (6) du boulon d'ancrage (2), et un axe longitudinal (10),
- au moins un moyen d'application (20) sur le boulon d'ancrage (2) pour recevoir une charge, et
- une douille d'expansion (4) entourant le boulon d'ancrage (2),
dans laquelle la cheville à expansion (1) a au moins une géométrie excentrique (11, 12), de telle sorte qu'un écartement de la douille d'expansion (4) peut être obtenu au moyen d'un mouvement de rotation du boulon d'ancrage (2) autour de l'axe longitudinal (10) faisant office d'axe de rotation (9),
**caractérisée en ce que**
le boulon d'ancrage, à l'autre seconde partie d'extrémité (8), est muni d'une douille rotative (14) et d'un point de rupture programmée (25) pour limiter le couple pouvant être reçu par la douille rotative (14), dans laquelle la douille rotative (14) et le point de rupture programmée (25) sont formés d'un seul tenant avec le boulon d'ancrage (2).

2. Cheville à expansion selon la revendication 1,
**caractérisée en ce que**
la cheville à expansion (1) comprend plusieurs géométries excentriques (11, 12).

3. Cheville à expansion selon la revendication 1 ou 2,
**caractérisée en ce que**
la au moins une géométrie excentrique (11, 12) est formée sur le boulon d'ancrage (2) et/ou sur la douille à expansion (4).

4. Cheville à expansion selon une ou plusieurs des revendications précédentes,
**caractérisée en ce que**
la au moins une géométrie excentrique (11, 12) est formée sur l'élément d'expansion (3) ou à l'extérieur de l'élément d'expansion (3) sur le boulon d'ancrage (2).

5. Cheville à expansion selon une ou plusieurs des revendications précédentes,
**caractérisée en ce que**
la douille rotative (14) est un polygone (24).

6. Cheville à expansion selon une ou plusieurs des revendications précédentes,
**caractérisée en ce que**
la au moins une géométrie excentrique (11, 12) est formée entre le boulon d'ancrage (2) et un côté extérieur radial de la douille d'expansion (4)
et/ou
la au moins une géométrie excentrique (11, 12) est formée d'un seul tenant sur le boulon d'ancrage (2) ou la douille d'expansion (4).

7. Cheville à expansion selon une ou plusieurs des revendications précédentes,
**caractérisée en ce que**
la douille d'expansion (4) peut être écartée au moyen d'un mouvement axial du boulon d'ancrage (2) dû à une géométrie conique d'élément d'expansion (3).

8. Cheville à expansion selon une ou plusieurs des revendications précédentes,
**caractérisée en ce que**
le au moins un moyen d'application (20) comprend un filetage (21) sur le boulon d'ancrage (2), une rondelle de calage (22) et un écrou (23).

9. Cheville à expansion selon une ou plusieurs des revendications précédentes,
**caractérisée en ce que**
le au moins un moyen d'application (20) sont formés sur une seconde partie d'extrémité (8) du boulon d'ancrage (2).

10. Cheville à expansion selon une ou plusieurs des revendications précédentes,
**caractérisée en ce que**
le boulon d'ancrage (2) et/ou l'élément d'expansion (3) et/ou le au moins un moyen d'application (20) est constitué au moins partiellement, en particulier entièrement, d'un métal, par exemple un acier.

11. Procédé pour la fixation d'une cheville à expansion (1) selon une ou plusieurs des revendications précédentes, comportant les étapes consistant à :
- introduire la cheville à expansion (1) selon une ou plusieurs des revendications précédentes dans un trou percé,
- écarter une douille d'expansion (4) de la cheville à expansion (1), de telle sorte que la douille d'expansion (4) soit radialement écartée par rapport à une paroi de trou percé,
dans lequel le boulon d'ancrage (2) est déplacé avec l'élément d'expansion (3) pendant un mouvement de rotation et la douille d'expansion (4) est écartée par au moins une géométrie excentrique (11, 12) en raison du mouvement de rotation.

12. Procédé selon la revendication 11,
**caractérisé en ce que**
l'axe de rotation (9) du mouvement de rotation correspond à un axe longitudinal (10) du boulon d'ancrage (2).

13. Procédé selon la revendication 11 ou 12,
**caractérisé en ce que**
un couple est appliqué sur une douille rotative (14) sur le boulon d'ancrage (2) à l'extérieur du trou percé afin de déplacer le boulon d'ancrage (2) avec l'élément d'expansion (3) pendant le mouvement de rotation.

14. Procédé selon une ou plusieurs des revendications 11 à 13,
**caractérisé en ce que**
le boulon d'ancrage (2) est déplacé après ou pendant l'écartement de la douille d'expansion (4) avec la au moins une géométrie excentrique (11, 12) en raison du mouvement de rotation du boulon d'ancrage (2) dans un mouvement de translation axial en direction d'un orifice de trou percé, et **en ce que** la douille d'expansion (4) est écartée en raison d'une géométrie conique de l'élément d'expansion (3).

15. Procédé selon la revendication 14,
**caractérisé en ce que**
le boulon d'ancrage (2) est vissé avec au moins un moyen d'application (20), par exemple un écrou (23) dans un filetage (21) du boulon d'ancrage (2), et déplacé pendant le mouvement de translation axial.
